# EUROPEAN PATENT APPLICATION

(11) **EP 1 126 402 A2**
(43) Date of publication of application: **22.08.2001**
(21) Application number: 01300649.9
(22) Date of filing: 25.01.2001
(51) Int. Cl.: G06K 7/10

(54) **Portable transaction terminal with produce data collector**

(30) Priority: 18.02.2000 US 507370
(71) Applicant: NCR INTERNATIONAL INC., Dayton, Ohio 45479 (US)
(72) Inventor: Morrison, James, Suwanee, Georgia 30024 (US)
(74) Representative: Williamson, Brian

(57) **Abstract**

A transaction terminal which processes produce items. The transaction terminal is portable and includes a bar code data collector, a produce data collector, and control circuitry for controlling the bar code data collector and the produce data collector. In a hand-held version, the terminal includes a hand-held housing, a storage medium for storing bar code data and produce data, a display, an input device, communication circuitry, and control circuitry. The terminal may additionally include a card reader for completing payment. The hand-held terminal is preferably powered by a battery.

## Description

The present invention relates to portable data collection terminals and more specifically to a portable transaction terminal with a produce data collector.

Items which are typically not identified and recorded by a bar code reader are produce items, since produce items are typically not labeled with bar codes. Bar code readers may include a scale for weighing produce items to assist in determining the price of such items. But identification of produce items is still a task for the checkout operator, who must identify a produce item and then manually enter an item identification code. Operator identification methods are slow and inefficient because they typically involve a visual comparison of a produce item with pictures of produce items. Operator identification methods are also prone to error, on the order of fifteen percent.

Bar code readers are well known for their usefulness in retail checkout and inventory control. Bar code readers are capable of identifying and recording most items during a typical transaction since most items are labeled with bar codes.

Hand-held and other portable bar code readers allow shoppers to scan items while shopping. However, produce items must still be processed separately. Therefore, it would be desirable to combine produce data collection and identification with bar code data collection into a single portable unit for self-checkout, inventory control, and other data collection purposes.

In accordance with the teachings of the present invention, a portable transaction terminal with a produce data collector is provided.

The transaction terminal is portable and includes a bar code data collector, a produce data collector, and control circuitry for controlling the bar code data collector and the produce data collector.

In a hand-held version, the terminal includes a hand-held housing, a storage medium for storing bar code data and produce data, a display, an input device, communication circuitry, and control circuitry. The terminal may additionally include a card reader for completing payment. The hand-held terminal is preferably powered by a battery.

A transaction method includes the steps of collecting bar code data for a merchandise item by a portable transaction terminal, collecting produce data for a produce item by portable transaction terminal, determining prices for the merchandise item and the produce item by the portable transaction terminal, and recording payment for the items.

The method optimally additionally includes the steps of displaying the item identification and price information for recorded items, recording customer acceptance or rejection of items through an input device in the portable transaction terminal, and recording a customer indication to finish shopping.

It is accordingly an object of the present invention to provide a portable transaction terminal with a produce data collector.

According to an aspect of the present invention there is provided a portable transaction terminal comprising:
a bar code data collector;
a produce data collector; and
control circuitry for controlling the bar code data collector and the produce data collector.

According to another aspect of the present invention there is provided a transaction method comprising the steps of:
(a) collecting bar code data for a bar-coded item by a portable transaction terminal;
(b) collecting produce data for a produce item by portable transaction terminal;
(c) determining prices for the bar-coded item and the produce item by the portable transaction terminal; and
(d) recording payment for the items.

An embodiment of the present invention will now be described, by way of example, with reference to the accompanying drawings, in which:
Fig. 1 is a block diagram of a transaction processing system including the transaction terminal of the present invention;
Fig. 2 is a perspective view of the transaction terminal;
Fig. 3 is a block diagram of the produce data collector;
Fig. 4 is an exploded view of the produce data collector;
Fig. 5 is an exploded view of the optical components of the produce data collector;
Fig. 6 is a top view of the assembled optical components of the produce data collector; and
Fig. 7 is a side view of the assembled optical components of the produce data collector.

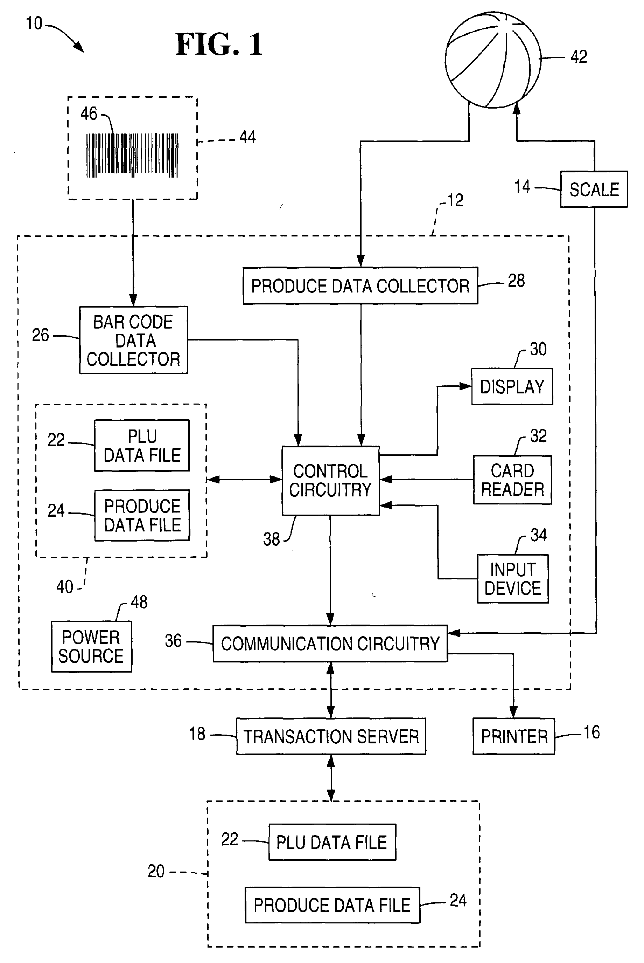

Referring now to Fig. 1, transaction system 10 primarily includes transaction terminal 12, scale 14, printer 16, and transaction server 18.

Transaction terminal 12 is a portable transaction terminal which allows a transaction to be completed anywhere in the store. Transaction terminal 12 determines prices for both bar coded item 44 and produce item 42.

Transaction terminal 12 includes bar code data collector 26, produce data collector 28, display 30, card reader 32, input device 34, communication circuitry 36, control circuitry 38, and power source 48.

Bar code data collector 26 reads bar code 46 on merchandise item 44 during shopping. Bar code data collector 26 may include a charge coupled device (CCD) bar code reader, light emitting diode (LED) bar code reader, wand bar code reader, fixed laser bar code scanner, moving laser bar code scanner, complimentary metal oxide semiconductor (CMOS) bar code reader, or two dimensional array bar code reader. Item identification and price information is stored within price look-up (PLU) data file 22.

Produce data collector 28 collects data for produce item 42. Such data may include color and color distribution data, size data, shape data, and aromatic data. Reference produce data is collected and stored within produce data file 24. During a transaction, produce data is collected and compared to produce data within produce data file 24.

Display 30 displays control information and transaction instructions. Display 30 also displays transaction information, including item identification information and item price information for each purchased item. Display 30 is preferably a liquid crystal display (LCD).

Card reader 32 records information from payment and other cards, such as customer loyalty cards. Card reader 32 may include a magnetic strip reader (MSR), a smart card reader, or a combination of both.

Input device 34 records customer responses, product information, and control command in response to customer input.

Communication circuitry 36 allows control circuitry 38 to download the latest price information from transaction server 18 and upload sales and payment information recorded by transaction terminal 12. Communication circuitry 36 communicates receipt information to printer 16. Communication circuitry 36 may also allow transaction terminal 12 to receive weight information from scale 14.

Communication circuitry 36 preferably includes both wireless and cable communication methods. Wireless communication may include wireless radio frequency (RF) communication and cable communication may include serial and parallel communication ports.

Control circuitry 38 controls operation of transaction terminal 12. Control circuitry 38 determines item identification and price information from bar code data collected by bar code data collector 26. Control circuitry 38 determines item identification and unit price information from produce data collected by produce data collector 28.

After identification of bar coded and non-bar coded items, control circuitry 38 obtains price information from PLU data file 22. For non-bar coded items, control circuitry 38 obtains weight information from scale 14 or from an operator through input device 34 in order to calculate a total cost. If necessary, control circuitry 38 alternatively uses communication circuitry 36 to download item identification and price information from transaction server 18.

Power source 48 is preferably a battery.

Scale 14 determines a weight for produce item 42. Scale 14 is preferably located near produce items 42, but may also be located elsewhere. For example, scale 14 may be mounted to a shopping cart and may be electrically connected to transaction terminal while in use.

Printer 16 prints receipts. Printer 16 may be a separate unit worn by the operator or may be integrated into transaction terminal 12.

Transaction server 18 sends price information for bar coded items and unit price information for non-bar coded items from PLU data file 22 to transaction terminal 12 upon request. Transaction server 18 also processes transaction information from transaction terminal 12 to, for example, update inventory information.

PLU data file 22 and produce data file 24 are stored within storage medium 20, but both may also be located within storage medium 40 of transaction terminal 12.

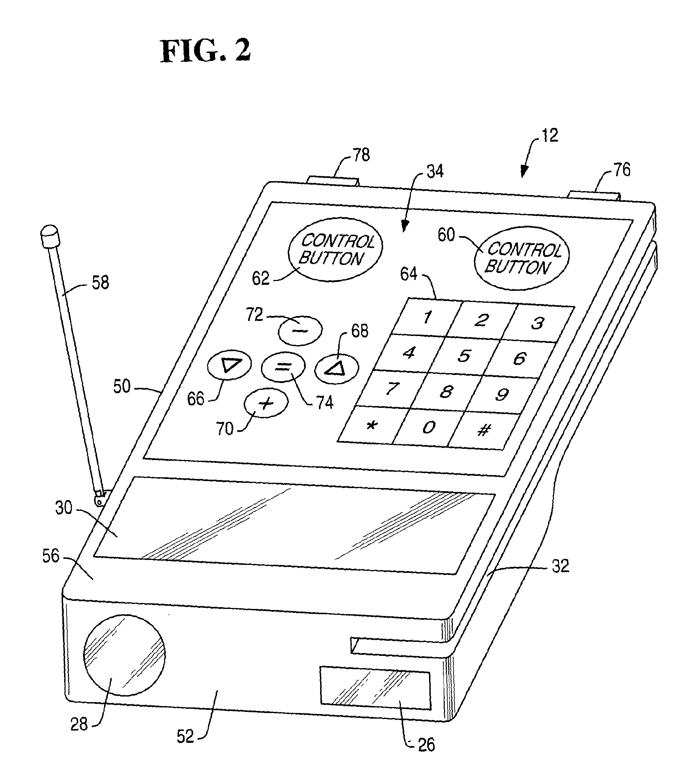

Turning now to Fig. 2, an example embodiment of transaction terminal 12 is shown.

Transaction terminal 12 includes light-weight housing 50, preferably made of plastic.

Visible from front end 52 are bar code data collector 26 and produce data collector 28.

Card reader 32 is accessible along side 54.

Display 30 and input device 34 are located on top surface 56.

Input device 34 includes numeric keypad 64 which records item identification information for items which are difficult to read using bar code data collector 26. Keypad 64 also records weight information when transaction terminal 12 is not connected to scale 14. Keypad 64 may also record control instructions.

Input device 34 includes item recording keys 60 and 62 which select operation of bar code data collector 26 or produce data collector 28.

Input device 34 also includes control keys 66-74. Control keys 66 and 68 allow an operator to scroll through the list of items in the transaction. Control keys 70 and 72 allow a customer to add or subtract a recorded item from the transaction list. Control key 74 allows a customer to finalize the transaction. Numeric keypad 64 may be used for performing calculations, entering information including quantity and weight information, and entering control instructions.

Communication ports 76 and 78 are accessible from rear surface 80. Port 76 is preferably a parallel port which connects to printer 16. Port 78 is preferably a serial port which optionally connects to scale 14 or transaction server 18. Antenna 58 is part of communication circuitry 36 for wireless communication with transaction server 18.

A customer obtains transaction terminal 12 from a central repository, preferably near a store's entrance. The central repository may also serve as a payment station. The latest price and produce information may be uploaded at the central repository before transaction terminal 12 is delivered to the customer. The customer also obtains a suitable carrier for collecting merchandise items, which preferably includes a shopping cart. The shopping cart may include printer 16 for printing receipts. The customer may then traverse the store to choose and collect the items.

During a transaction, an operator aims bar code data collector 26 at bar coded items and engages control button 60. An operator collects produce items 42 and returns them to scale 14. The operator aims produce data collector 28 at produce items 42 and engages control button 62. Transaction terminal 14 prompts the operator for weight information. If scale 14 is connected to transaction terminal 12 through port 78, the operator engages a key on input device 34 to signal transaction terminal 12 to obtain weight information directly from scale 14. If scale 14 is not connected to transaction terminal 12, the operator uses numeric keypad 64 to enter a weight indication from scale 14.

Following recording of each item, transaction terminal 12 may be configured to prompt the operator to enter quantity information to avoid individual readings of like items. Item identification and price information are also displayed by display 30. The operator accepts or rejects the recorded item by engaging either plus key 70 or minus key 72. An operator can later reject an item and/or review the transaction list using scroll keys 66 and 68. The operator indicates the end of the transaction by engaging equal key 74. Display 30 displays instructions for completing the transaction, including payment.

Payment may be completed either with a payment card using card reader 32, or with cash, check, or payment card at a payment station.

If the operator chooses to pay through transaction terminal 12 using a payment card, transaction terminal 12 records the payment information on the payment card using card reader 32. A receipt may be printed either at the payment station or using a printer attached to the shopping cart. Communication circuitry 36 sends the sales and payment information to transaction server 18.

Following payment, the customer returns transaction terminal 12 to the central repository and leaves with the purchased items. The customer may be asked to pass a routine security check before leaving.

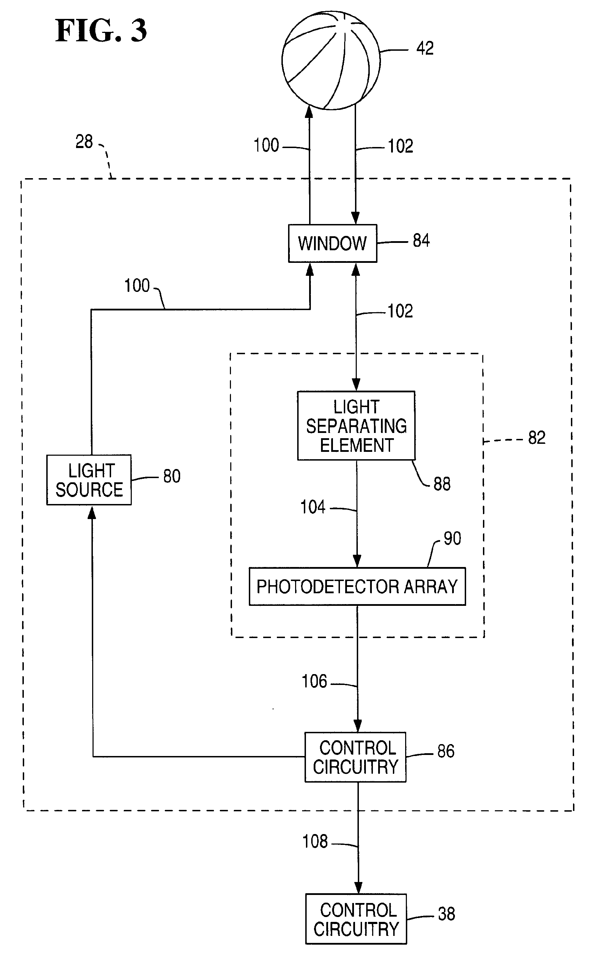

Turning now to Fig. 3, an example embodiment of produce data collector 28 primarily includes light source 80, spectrometer 82, transparent window 84, and control circuitry 86.

Light source 80 produces light 100. Light source 80 preferably produces a white light spectral distribution, and preferably has a range from four hundred 400nm to 700nm, which corresponds to the visible wavelength region of light.

Light source 80 preferably includes one or more light emitting diodes (LEDs). A broad-spectrum white light producing LED, such as the one manufactured by Nichia Chemical Industries, Ltd., is preferably employed because of its long life, low power consumption, fast turn-on time, low operating temperature, good directivity. Alternate embodiments include additional LEDs having different colors in narrower wavelength ranges and which are preferably used in combination with the broad-spectrum white light LED to even out variations in the spectral distribution and supplement the spectrum of the broad-spectrum white light LED.

Spectrometer 82 primarily includes light separating element 88, and photodetector array 90.

Light separating element 88 splits light 102 into light 104 of a continuous band of wavelengths. Light separating element 88 is preferably a linear variable filter (LVF), such as the one manufactured Optical Coating Laboratory, Inc., or may be any other functionally equivalent component, such as a prism or a grating.

Photodetector array 90 produces waveform signals 106 containing spectral data. The pixels of the array spatially sample the continuous band of wavelengths produced by light separating element 88, and produce a set of discrete signal levels. Photodetector array 90 is preferably a complimentary metal oxide semiconductor (CMOS) array, but could be a Charge Coupled Device (CCD) array.

Control circuitry 86 controls operation of produce data collector 28 and produces digitized produce data waveform signals 108. For this purpose, control circuitry 86 includes an analog-to-digital (A/D) converter. A twelve bit A/D converter with a sampling rate of 22-44kHz produces acceptable results.

Window 84 includes an anti-reflective surface coating to prevent light 100 reflected from window 84 from contaminating reflected light 102. Window 84 is about three quarters inches in width and length (square) or diameter (circular).

In operation, control circuitry 86 turns on light source 80 in response to operator placement of window 84 against produce item 42 and engagement of control button 62. Light separating element 88 separates reflected light 102 into different wavelengths to produce light 104 of a continuos band of wavelengths. Photodetector array 90 produces waveform signals 106 containing produce data. Control circuitry 86 produces digitized produce data signals 108 which it sends to control circuitry 38.

Advantageously, produce data collector 28 captures image data in about two tenths of a second, well within normal produce handling time.

Control circuitry 38 uses produce data in digitized produce data signals 108 to identify produce item 42. Here, produce data consists of digitized waveforms which control circuitry 38 compares to a library of digitized waveforms stored within produce data file 24. After identification, control circuitry 38 obtains a unit price from PLU data file 22 and a weight from scale 14, or from input device 34, in order to calculate a total cost of produce item 42. If necessary, control circuitry 38 alternatively uses communication circuitry 36 to download item identification and price information from transaction server 18.

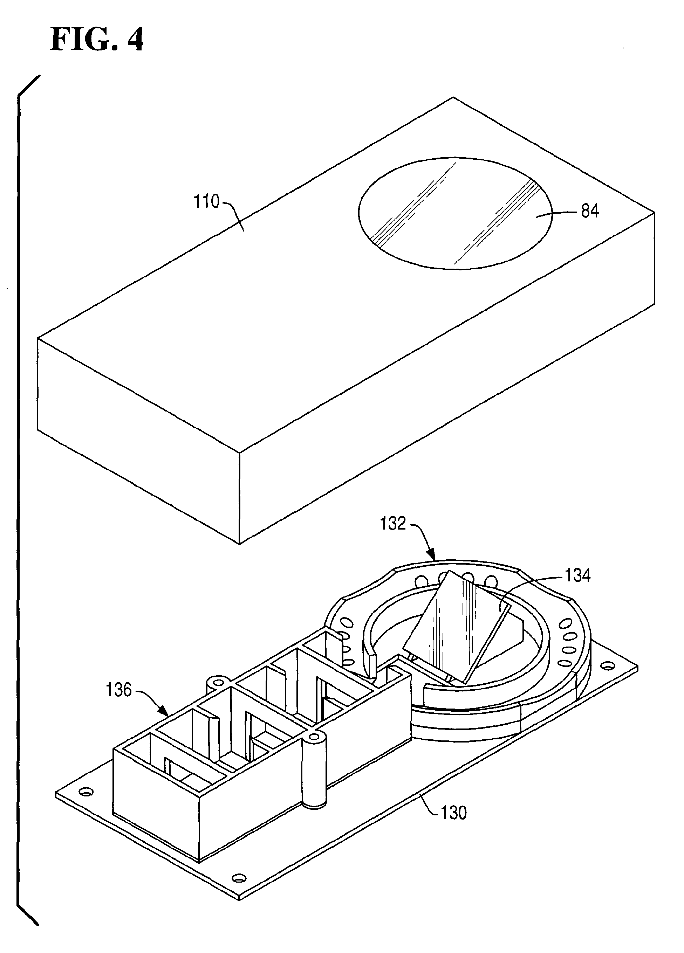

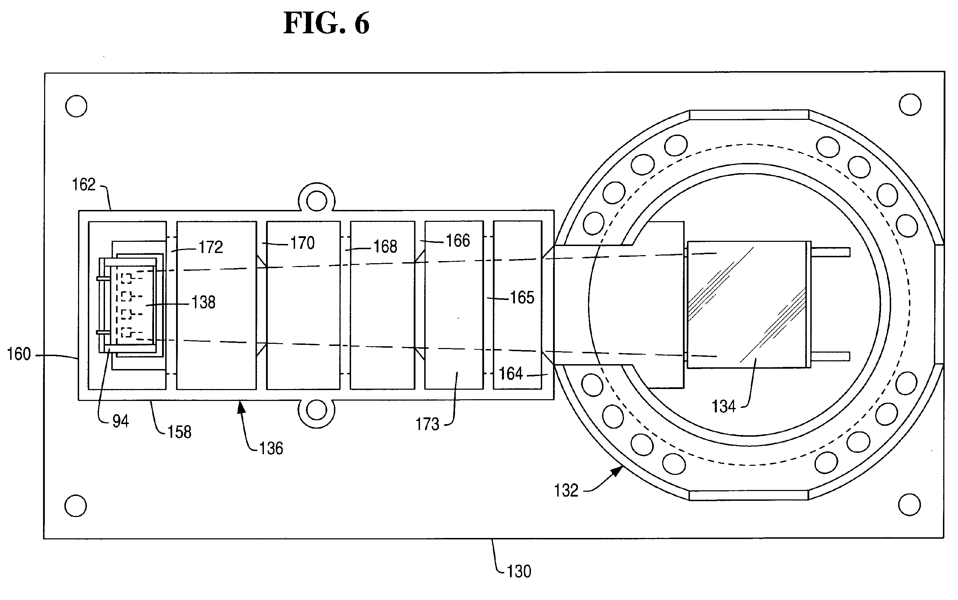

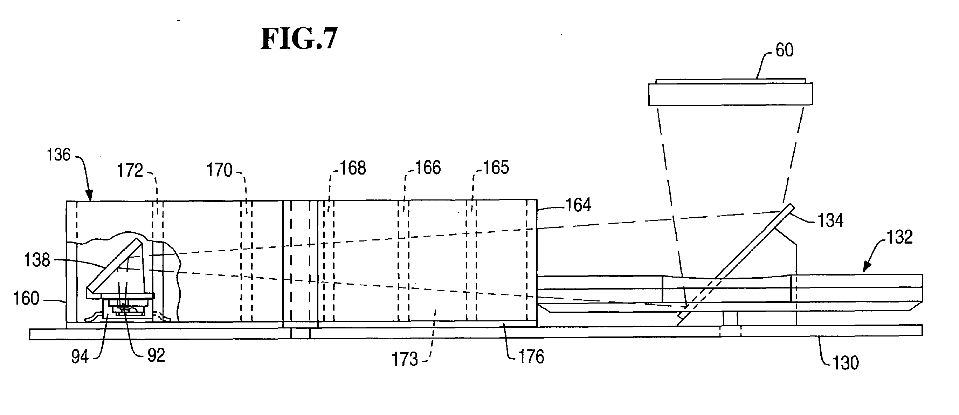

With reference to Figs. 4-7, example produce data collector 28 is shown in further detail.

Housing 110 is approximately five and a half inches in length by two and three quarters inches in width by one and three quarters inches in height.

Produce data collector 28 additionally includes printed circuit board 130, light source assembly 132, turning mirror 134, stray light baffle 136, and turning mirror 138.

Printed circuit board 130 contains control circuitry 86 and forms a base for light separating element 88, photodetector array 90, light source assembly 132, turning mirror 134, stray light baffle 136, turning mirror 138, and mount 139. Printed circuit board 130 fastens to housing 110. Printed circuit board 130 serves as a carrier for all of the active components in this system, thus when it is manufactured and tested, the entire system can be tested by testing printed circuit board 130.

Light source assembly 132 includes light source 80, lower light source mount 140, and upper light source mount 142.

Light source 80 preferably includes a number of white LEDs which are arranged close to window 84 and in direct line of sight of window 84. Light source mounting assembly 132 is designed such that each individual LED is pointed at the top surface of window 84 so that there is uniform luminosity over the entire top surface of window 84 for illuminating produce item 42. In this embodiment, the LEDs are all aimed at the center of window 84 and oriented at an angle of about 31.75 degrees. The LEDs are located at a distance of about 1.657 inches from the center of window 84, and 1.075 inches from the center of light source assembly 132.

This embodiment provides uniformity in both spectrum and luminosity. Since it is highly desirable to avoid using complicated optical devices, such as lens systems and light pipes, for simplicity, the preferred embodiment envisions arrangements of multiple LEDs. The LEDs are spectrally matched in groups, and their placement and orientation achieves optimal uniformity in both spectrum and luminosity across the illuminated surface area.

To achieve uniformity in both spectrum and luminosity with multiple LEDs, the LED samples are first sorted into spectrally matched groups by computing and analyzing the matrices of linear correlation coefficients. The direct illumination from LEDs in a matched group will have a uniform spectrum regardless of their positions and beam orientations.

Second, LED positions and beam orientations are arranged to achieve uniform luminosity. If higher luminosity is needed to achieve adequate signal level, multiple groups can be used. The total illumination from multiple groups will be uniform in both spectrum and luminosity even if the spectra from different groups are different.

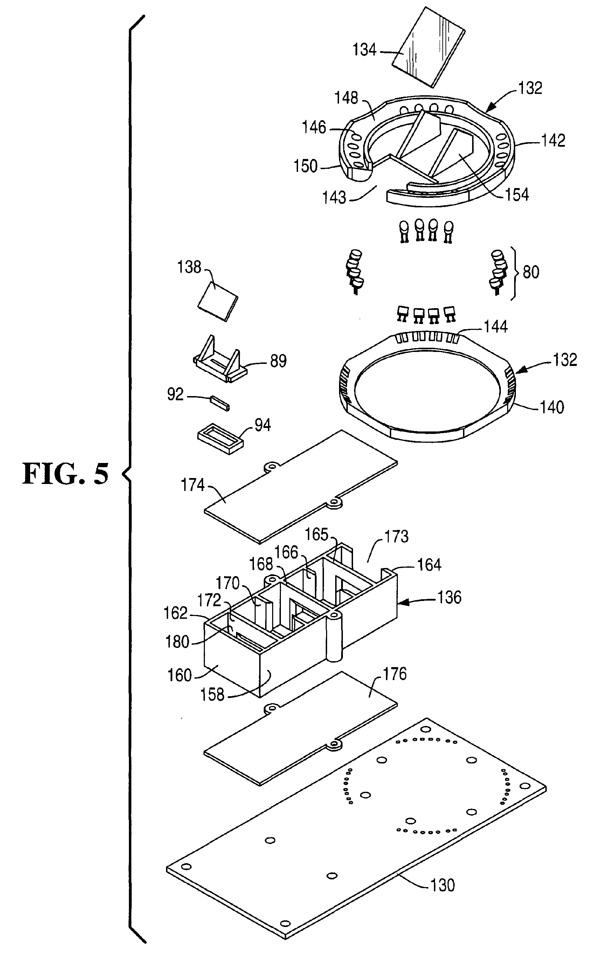

Fig. 5 shows sixteen white LEDs arranged in four groups of four LEDs on four sides of lower light source mount 140. Other arrangements are also envisioned by the present invention, such as two or four groups of four and eight LEDS. The use of a single white LED is also envisioned because it provides spectral uniformity, providing acceptable luminosity across window 84 only if window 84 is smaller. To achieve higher system efficiency, LEDs with a narrow, concentrated beam are preferred.

Lower light source mount 140 is generally circular in shape. This arrangement supports the LEDs in the preferred arrangement and orientation. Lower light source mount 140 connects mechanically and electrically to printed circuit board 130 and includes terminal connections 144 for light sources 80.

Upper light source mount 142 is also generally circular in shape and connects mechanically in mating relationship to lower light source mount 140. Upper light source mount 142 mechanically hold the LEDs in a preferred orientation for even illumination across the area of window 84. Upper light source mount 142 includes gap 143 which allows reflected light 102 to be directed to photodetector array 90. Upper light source mount 142 further includes apertures 146 through which light sources 80 emit light from positions below top surface 148. Top surface 148 angles downwardly from outer wall 150 to inner wall 152 perpendicular with the inclination angles of lights sources 80.

Turning mirror 134 routes reflected light 114 from produce item 42 through stray light baffle 136 towards turning mirror 138. Deflector mirror 134 is mounted at about a forty-five degree angle on base 154, which is incorporated into upper light source mount 142. Turning mirror 134 is preferably substantially planar and has a rectangular shape.

Turning mirror 138 directs reflected light 102 to light separating element 88. Turning mirror 138 is mounted at about a forty-five degree angle on mount 139. Turning mirror 138 is substantially planar and has a rectangular shape.

Stray light baffle 136 mounts directly to printed circuit board 130 and helps to minimize the amount of light from light sources 80 that reaches photodetector array 90 directly, as well as any other sources of light other than the light reflected from produce item 42, such as ambient light. For this purpose, stray light baffle 136 includes outer walls 158-164, inner walls 165-172, top wall 174, and bottom wall 176. Outer walls 158-164 form a generally rectangular assembly. Outer wall 164 is adjacent to upper and lower light source mounts 140 and 142.

Walls 158, 160, 162 and 172 define a chamber containing turning mirror 138, mount 89, light separating element 88, and photodetector array 90. Photodetector array 90 is mounted directly to printed circuit board 130. Light separating element 88 is held within mount 89, which rests directly upon photodetector array 90. Light separating element 88 is held in close proximity to photodetector array 90.

Walls 158-162 cooperate to channel light turning mirror 138 through an ever-narrowing tunnel 173. Walls 165, 166, and 170 are generally U-shaped walls and provide a lower bound for tunnel 173. Walls 164, 168, and 172 are generally inverted U-shaped walls and provide an upper bound for tunnel 173. Tunnel opening 178 at wall 164 for receiving reflected light 114 from deflector mirror 134 is larger than tunnel opening 180 at wall 172. Tunnel openings 178 and 180 are optimally sized to allow as much light energy in reflected light 102 as possible to be incident on photodetector array 90, while restricting the angles of incidence of reflected light 102 to less than six degrees.

Advantageously, this reduces spectral distortion without significant loss of reflected light levels. Reduction of spectral distortion is particularly important when light separating element 88 is an LVF or a dispersing element, such as a prism or a grating.

To reduce such spectral distortion, the present embodiment reduces the size of the field-of-view in at least two ways. First, light sources 80 are inwardly inclined in order to accommodate a smaller size for window 84 without significant loss in outgoing light levels. Second, distance between window 84 and light separating element 88 is increased to an optimum distance, consistent with the fact that the angle for light incident upon light separating element 88 must be less than six degrees. If the angle is greater than six degrees then there is unequal attenuation through light separating element 88 which adds error to the system. In other words, produce item 42 will appear to have different spectra characteristics when located at different locations on window 84.

Advantageously, housing 110 is small in size. In particular, it is much smaller than other produce data collectors, such as video cameras. Produce data collector 28 is small enough in size to be mounted within transaction terminal 12. Produce data collector 28 is also light in weight, about eight ounces.

Although the invention has been described with particular reference to certain preferred embodiments thereof, variations and modifications of the present invention can be effected within the spirit and scope of the following claims. In particular, alternate embodiments may be further reduced or enlarged in size as window 84 is made smaller or larger. Also, the number light source 80 may change, but all of these variations are incorporated in the scope of present invention and may be considered alternative embodiments.

## Claims

1. A portable transaction terminal comprising:
a bar code data collector;
a produce data collector; and
control circuitry for controlling the bar code data collector and the produce data collector.

2. A terminal as claimed in claim 1, further comprising:
a card reader controlled by the control circuitry.

3. A terminal as claimed in claim 1 or claim 2, further comprising:
an input device coupled to the control circuitry for recording operator commands and keystrokes.

4. A terminal as claimed in any preceding claim, further comprising:
a storage medium coupled to the control circuitry for storing bar code data and produce data.

5. A terminal as claimed in any preceding claim, further comprising:
communication circuitry coupled to the control circuitry for exchanging information with a transaction server.

6. A terminal as claimed in any preceding claim, further comprising:
communication circuitry coupled to the control circuitry for sending receipt information to a printer.

7. A transaction method comprising the steps of:
(a) collecting bar code data for a bar-coded item by a portable transaction terminal;
(b) collecting produce data for a produce item by portable transaction terminal;
(c) determining prices for the bar-coded item and the produce item by the portable transaction terminal; and
(d) recording payment for the items.

8. A method as Claimed in claim 7, wherein step (d) comprises the substep of:
(d-1) recording payment by a card reader in the portable transaction terminal.

9. A method as claimed in claim 7 or claim 8, further comprising the step of:
(e) printing a receipt by a portable printer coupled to the portable transaction terminal.

10. A method as claimed in any of claims 7 to 9, wherein step (d) comprises the substep of:
(d-1) recording payment by a card reader at a payment station.

11. A method as claimed in any of claims 7 to 10 further comprising the step of:
(e) printing a receipt by a printer at the payment station.

12. A method as claimed in any claims 7 to 11, further comprising the step of:
(e) recording weight information for the produce item from a scale by the portable transaction terminal.

13. A method as claimed in any of claims 7 to 12, wherein step (e) comprises the substep of:
(e-1) recording the weight information by a keypad in the portable transaction terminal.

14. A method as claimed in any of claims 7 to 13, wherein step (e) comprises the substeps of:
(e-1) coupling the scale to a port of the portable transaction terminal; and
(e-2) recording the weight information through the port by the portable transaction terminal.

15. A method as claimed in any of claims 7 to 14, further comprising the steps of:
(e) displaying a prompt for quantity information for the produce item by the portable transaction terminal; and
(f) recording the quantity information by an input device in the portable transaction terminal.
